# EUROPÄISCHE PATENTSCHRIFT

(11) **EP 0 875 273 B1**
(45) Veröffentlichungstag und Bekanntmachung des Hinweises auf die Patenterteilung: **12.06.2002**
(21) Anmeldenummer: 98105917.3
(22) Anmeldetag: 01.04.1998
(51) Int. Cl.: B01D 46/24, B01D 46/42, B01D 46/04

(54) **Gerät für den Einsatz in filternden Abscheidern**
Device for use in filter separators
Dispositif pour utilisation dans des séparateurs filtrant

(30) Priorität: 10.04.1997 DE 29706359 U
(43) Veröffentlichungstag der Anmeldung: 04.11.1998
(73) Patentinhaber: Thomas Josef Heimbach Gesellschaft mit beschränkter Haftung & Co., D-52353 Düren (DE)
(72) Erfinder: Schulz, Peter, 47877 Willich (DE); Wolff, Joachim, 52249 Eschweiler (DE)
(74) Vertreter: Paul, Dieter-Alfred, Dipl.-Ing.

(56) Entgegenhaltungen:
- EP-A- 0 046 740
- DE-A- 4 309 302
- US-A- 1 830 098
- US-A- 3 665 547
- US-A- 4 686 848
- US-A- 5 361 452

## Beschreibung

Die Erfindung betrifft ein Filterprüfgerät für die Überprüfung von filternden Abscheidern mit insbesondere schlauch-, taschen- oder patronenförmigen Filtermitteln.

Um die Luftdurchlässigkeit bei verschmutzten Filterschläuchen zu messen, muß der betreffende Filterschlauch ausgebaut, verpackt und zu dem Labor versandt werden, das solche Messungen durchführt. In dem häufig langen Zeitraum zwischen dem Ausbau und der Laboruntersuchung unterliegen der Filterschlauch und der an ihm haftende Staub erheblichen veränderungen. Dies beruht zum einen auf Umwelteinflüssen, insbesondere der Einwirkung der Luftfeuchtigkeit. Zum anderen wird der Staubkuchen durch das Walken und Aufrollen des Filterschlauchs beim und nach dem Ausbau zerstört. Aus diesen Gründen lassen sich die im Labor gemessenen Luftdurchlässigkeitswerte nur ungenau bewerten und dann auch nur bezogen auf vorangegangene Untersuchungen. Die Leistungsfähigkeit der Anlage kann nur vage und unter Berücksichtigung von Erfahrungswerten angegeben werden.

Stark verschmutzte oder verkrustete Filterschläuche lassen sich bisher nur dadurch reinigen, daß sie außerhalb der Filteranlage, also nach deren Ausbau, einer Trockenoder Naßreinigung unterzogen werden. Es fällt also derselbe Aufwand an Zeit und Kosten wie bei einem kompletten Wechsel des Filterschlauchs an. Bei einer Naßwäsche muß der Filterschlauch transportiert, naß gewaschen und getrocknet werden. Hierfür sind geeignete Arbeitsräume und die Benutzung von Personenschutzkleidung notwendig, um die damit befaßten Personen vor dem Filterstaub, der teilweise auch kontaminiert ist, zu schützen. Hinzu kommt, daß die durch Kalandrierung oder Sengung bewirkte Oberflächenvergütung zum größten Teil verlorengeht. Auch Oberflächenbeschichtungen können irreversibel beschädigt werden. Außerdem neigen die Filterschläuche bei der Naßwäsche zum verfilzen und Schrumpfen.

Die vorbeschriebene Trocken- bzw. Naßreinigung außerhalb der Filteranlage kann nur begrenzt ersetzt werden mit Hilfe eines fest eingebauten Puls-Jet-Systems. Bei diesem System werden über kleine Düsen gleichzeitig in allen Filterschläuchen Druckluftimpulse erzeugt. Daneben sind tragbare Abreinigungsgeräte bekannt, mit denen ebenfalls Druckstöße bewirkt werden können (vgl. US-A-3,665,547; US-A-5,361,452).

Der Erfindung liegt die Aufgabe zugrunde, ein Filterprüfgerät für den Einsatz an Filteranlagen bereitzustellen, mit dem sich Filtermittel, z. B. Filterschläuche, vor Ort, d. h. in der Filteranlage selbst, überprüfen lassen. Eine weitere Aufgabe besteht darin, dies mit einer wirksamen Abreinigung zu kombinieren.

Der erste Teil der Aufgabe wird erfindungsgemäß durch ein Filterprüfgerät mit folgenden Merkmalen gelöst:
a) das Filterprüfgerät hat eine schlauch- oder rohrförmige Luftförderstrecke;
b) die Luftförderstrecke weist einerends einen Aufsetzstutzen auf;
c) in der Luftförderstrecke ist ein Luftförderer zur Erzeugung eines Luftstroms in wenigstens einer Richtung angeordnet;
d) der Luftförderstrecke ist wenigstens ein Druckmesser zur Erfassung und Anzeige des Drucks im Luftstrom zugeordnet;
e) die Luftförderstrecke ist mit einem Luftdurchflußmesser und/oder einem Luftvolumenmesser mit Anzeige versehen;
f) das Gerät ist als tragbare Einheit ausgebildet.

Der Grundgedanke der Erfindung besteht darin, ein mobiles Filterprüfgerät vorzusehen, das auf das obere Ende z. B. eines Filterschlauchs aufgesetzt und mit dem ein Luftstrom erzeugt werden kann, über den die Luftdurchlässigkeit mit Hilfe eines Druckmessers und eines Luftdurchflußmessers und/oder eines Luftvolumenmessers erfaßt werden kann, ohne daß der Filterschlauch hierfür aus der Filteranlage ausgebaut werden muß. Es wird also die Luftdurchlässigkeit eines ganzen Filtermittels gemessen, wobei alle die Luftdurchlässigkeit beeinflussenden Merkmale wie Stützkorb, Venturi, Nähte, Manschetten, Böden etc. berücksichtigt werden. Dabei bleibt der Staubkuchen unbeeinflußt. Die Ergebnisse der Messungen stehen dem Inhaber der Filteranlage sofort zur Verfügung. Sie können vor Ort diskutiert werden, und es können auch Sofortmaßnahmen beispielsweise zur Verbesserung der Abreinigung geplant und weitergehende Versuche durchgeführt werden. Es kann auch unmittelbar die Wirkungsweise einer systemeigenen Abreinigungsanlage, beispielsweise eines Puls-Jet-Systems, überprüft werden, indem die Luftdurchlässigkeit vor und nach einer Abreinigungsmaßnahme gemessen wird. Auch die Messung der Luftdurchlässigkeit bei einer Vielzahl von Filterschläuchen geht schnell vor sich, und es kann ein komplettes Kammer-screening erstellt werden.

Selbstverständlich ist der Einsatz des erfindungsgemäßen Geräts nicht auf Schlauchfilter beschränkt. Bei entsprechender Ausbildung des Aufsetzstutzens können Luftdurchlässigkeitsmessungen auch an anderen filternden Abscheidern durchgeführt werden.

In Ausbildung der Erfindung ist vorgesehen, daß der bzw. wenigstens ein Druckmesser im Bereich des Aufsetzstutzens angeordnet ist. Zweckmäßigerweise sollte die Luftförderstrecke eine Einstelleinrichtung zur Einstellung eines bestimmten Drucks oder Volumenstroms aufweisen. Dabei können auch mehrere Druckmesser vorgesehen sein.

Als Luftförderer kommen insbesondere Ventilatoren oder Druckluftejektoren in Frage.

Für die meisten Anwendungsfälle sollte der Luftförderer so ausgebildet sein, daß er einen Luftstrom vom Aufsetzstutzen in Richtung auf den Luftförderer erzeugt, also einen Saugluftstrom. Für Fälle, in denen die Luftführung der Filteranlage umgekehrt ist, sollte der Luftförderer einen Druckluftstrom in Richtung auf den Aufsetzstutzen erzeugen können. Besonders vorteilhaft ist es, wenn der Luftförderer für die Erzeugung eines Luftstroms in beiden Richtungen ausgebildet ist, da das Gerät dann unabhängig von der Luftführung in der Filteranlage eingesetzt werden kann.

Nach der Erfindung ist desweiteren vorgesehen, daß in die Luftförderstrecke ein Staubdetektor mit Anzeige eingebaut ist. Mit Hilfe dieses Staubdetektors können die staubpartikel im abgesaugten Luftstrom ermittelt und angezeigt werden.

Der zweite Teil der Aufgabe wird durch ein Filterprüfgerät gelöst, das durch folgende Merkmale ergänzt ist:
a) das Filterprüfgerät hat eine schlauch- oder rohrförmige Luftförderleitung;
b) die Luftförderleitung weist einerends einen Aufsetzstutzen auf;
c) in der Luftförderleitung ist ein Ventil angeordnet;
d) die Luftförderleitung hat auf der dem Aufsetzstutzen abgewandten Seite des Ventils einen Druckluftanschluß.

Mit dem so ergänzten Filterprüfgerät können nach Anschluß an eine Druckluftquelle Druckstöße erzeugt werden, über die das Filtermittel abgereinigt werden kann. Dabei lassen sich hohe Drücke und große Mengen an Druckluft erzeugen, so daß das Gerät hochwirksam ist. Hierdurch können auch größere Agglomerationen abgelöst werden, die mit anlageneigenen Systemen nicht mehr abgereinigt werden können. Die Luftdurchlässigkeitsverbesserung beträgt bis zu 90%.

Besonders vorteilhaft ist es, zwischen Druckluftanschluß und Ventil einen Druckluftvorratsbehälter anzuordnen, welcher zweckmäßigerweise zum Druckluftanschluß hin verschließbar ist und/oder eine Reduziereinrichtung zur Einstellung des Drucks im Druckluftvorratsbehälter aufweist. Eine besonders kompakte Ausbildung des Geräts ergibt sich dann, wenn der Druckluftvorratsbehälter die Luftförderleitung zwischen Ventil und Aufsetzstutzen umgibt.

Grundsätzlich sollte das Ventil schnellöffnend ausgebildet sein, damit eine hohe Druckspitze erzeugt werden kann. Hierzu eignet sich insbesondere ein magnetbetätigtes Membranventil, wobei die Membranbetätigung bezüglich der Öffnungszeit des Ventils einstellbar ausgebildet sein sollte.

Der Aufsetzstutzen sollte so beschaffen sein, daß er über verschiedene Öffnungsgrößen oder Arten der Filtermittel gestülpt oder hierfür gegen passende Aufsetzstutzen ausgetauscht werden kann. Hierfür eignet sich eine entsprechende glockenförmige Ausbildung besonders. Zweckmäßigerweise hat der Aufsetzstutzen stirnseitig Dichtelemente.

Ein besonders kompaktes Filterprüfgerät ergibt sich, wenn die Luftförderstrecke und die Luftförderleitung ineinander münden, so daß das Filterprüfgerät nur einen Aufsetzstutzen für beide Funktionen aufweist. Dabei können Luftförderstrecke und Luftförderleitung im Bereich des Aufsetzstutzens zusammenlaufen. Damit in solchen Fällen die Erzeugung eines Druckstoßes nicht beeinträchtigt wird, sollte in der Luftförderstrecke ein Schließventil eingebaut sein, mit dem sich die Luftförderstrecke blockieren läßt.

In der Zeichnung ist die Erfindung anhand von Ausführungsbeispielen näher veranschaulicht. Es zeigen:
- Figur 1: ein Filterprüfgerät zur Messung der Luftdurchlässigkeit in der seitenansicht;
- Figur 2: das Filterprüfgerät gemäß Figur 1 in der Frontansicht;
- Figur 3: ein Gerät zur Abreinigung von Filterschläuchen in der Seitenansicht als zum Pilterprüfgerät selbständiges Gerät, das nicht unter den Schutzumfang des Patents fällt;
- Figur 4: das Gerät gemäß Figur 3 in der Frontansicht mit Teilschnittdarstellungen;
- Figur 5: ein kombiniertes Filterprüfgerät für die Luftdurchlässigkeitsmessung und Abreinigung in der Seitenansicht und
- Figur 6: einen Luftförderer für das Gerät gemäß Figur 5.

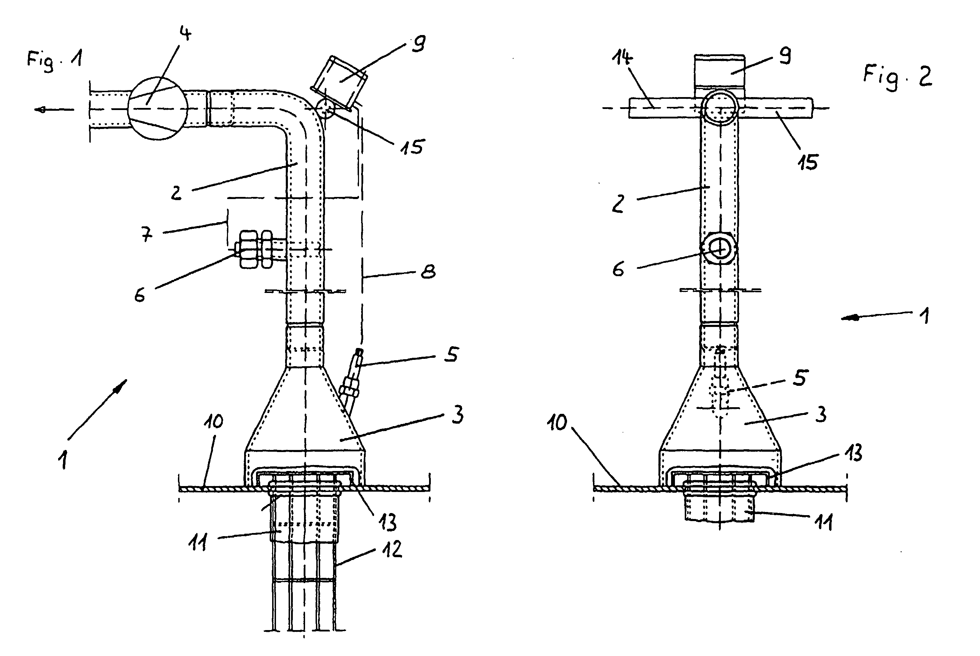

Das in den Figuren 1 und 2 dargestellte Filterprüfgerät 1 weist ein Luftförderrohr 2 auf, das untenseitig in einen sich kegelförmig erweiternden Aufsetzstutzen 3 ausläuft. Nach oben hin biegt es nach senkrechtem Verlauf in die Waagerechte um. Dort ist ein Ventilator 4 eingebaut, der in dem Luftförderohr 2 einen Saugstrom erzeugen kann.

In dem Aufsetzstutzen 3 sitzt ein Drucksensor 5, mit dem sich der statische Druck in dem Aufsetzstutzen 3 bzw. dem Luftförderrohr 2 messen läßt. Etwa in der Mitte des senkrechten Teils des Luftförderrohrs 2 ist ein Volumenstrommesser 6 eingebaut. Über Leitungen 7, 8 sind Drucksensor 5 und Volumenstrommesser 6 mit einer Meßwertanzeige 9 verbunden, die am oberen Knie des Luftförderrohrs 2 angebracht ist.

Der Aufsetzstutzen 3 sitzt auf der Oberseite eines Lochbodens 10, der zu einer Schlauchfilteranlage üblicher Bauart gehört. An dessen Lochboden 10 sind eine Vielzahl von Filterschläuchen aufgehängt, von denen hier nur das obere Ende eines Filterschlauchs 11 dargestellt ist. Der Filterschlauch 11 wird innenseitig durch einen über dessen Länge gehenden Stützkorb 12 abgestützt, so daß er nicht einfallen kann. Der Stützkorb 12 weist obenseitig eine Randabstützung 13 auf, welche auf dem Lochboden 10 aufsitzt.

Über die obere Öffnung des Stützkorbs 12 und des Pilterschlauchs 11 ist der Aufsetzstutzen 3 gestülpt, und zwar so, daß stirnseitig eine Abdichtung mit dem Lochboden 10 bewirkt wird. Mit Hilfe des Ventilators 4 kann in dem Luftförderrohr 2, dem Aufsetzstutzen 3 und dem Filterschlauch 11 ein Saugluftstrom erzeugt werden. Der statische Druck wird mit Hilfe einer hier nicht näher dargestellten Bypass-Anordnung mit darin angeordnetem Steuerventil auf einen bestimmten Wert eingestellt, der über den Drucksensor 5 und die Meßwertanzeige 9 abgelesen werden kann. Der sich dann einstellende volumenstrom wird von dem Volumenstrommesser 6 erfaßt und durch die Meßwertanzeige 9 gleichfalls angezeigt. Er ist dann ein Maß für den Verschmutzungsgrad des Filterschlauchs 11. Es kann auch umgekehrt verfahren werden, nämlich auf einen bestimmten Volumenstrom eingestellt und dann der statische Druck an der Meßwertanzeige 9 abgelesen werden.

Aufgrund des einfachen Aufbaus ist das Filterprüfgerät 1 tragbar, kann also bequem in die Filteranlage eingebracht und dort von Filterschlauch 11 zu Filterschlauch umgesetzt werden. Dabei helfen Handgriffe 14, 15, die am Knie des Luftförderrohrs 2 angebracht sind und auf denen die Meßwertanzeige 9 aufgesetzt ist.

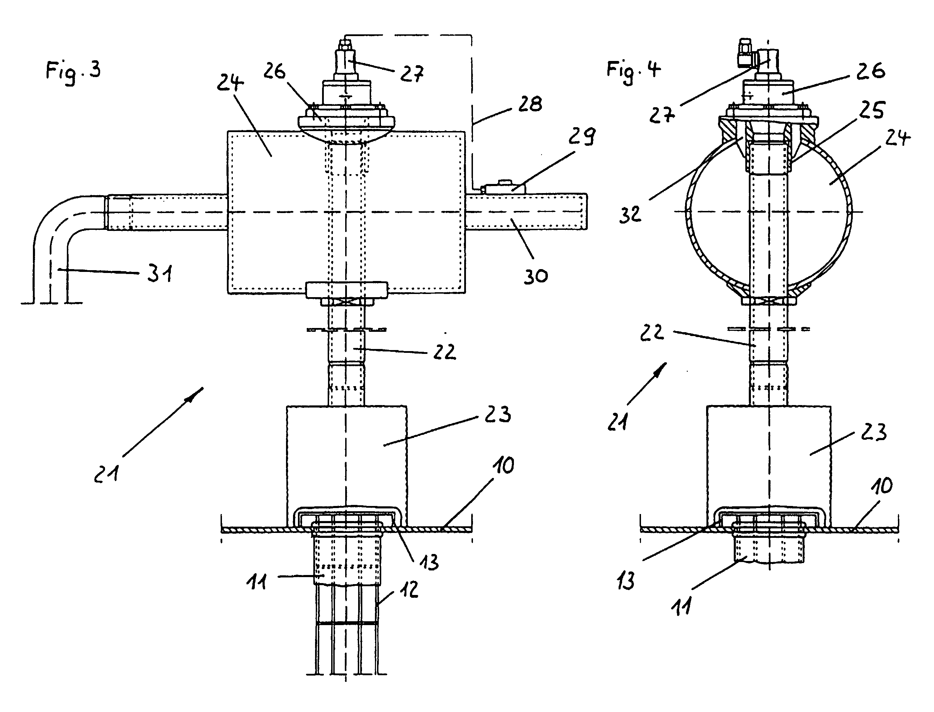

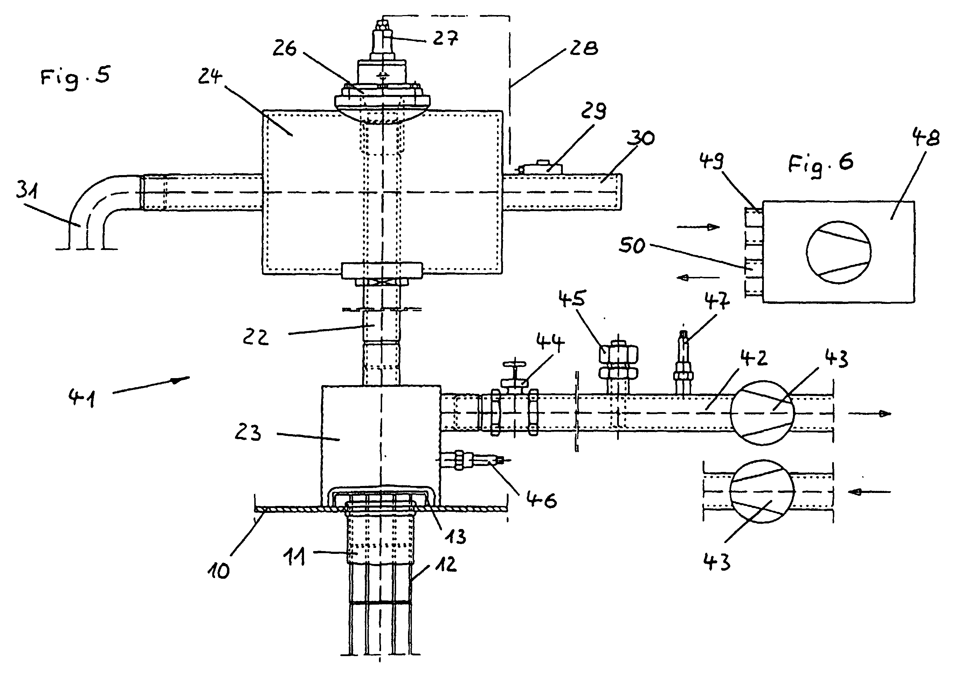

Das in den Figuren 3 und 4 dargestellte Gerät, das nicht unter den Schutzumfang des Patents fällt, 21 dient der Abreinigung. Es weist eine senkrechte, hochstehende Luftförderleitung 22 auf, die untenseitig in einen zylindrischen Aufsetzstutzen 23 ausläuft. Nach oben hin durchdringt die Luftförderleitung 22 einen zylindrischen Druckluftvorratsbehälter 24 und läuft obenseitig in einen Ventilstutzen 25 eines Membranventils 26 aus. Das Membranventil 26 weist eine Magnetbetätigung 27 auf, die über eine Leitung 28 mit einem Taster 29 verbunden ist, über den die Magnetbetätigung 27 aktiviert werden kann. Der Taster 29 sitzt auf einer horizontalen Stange 30, die an der rechten Seite des Druckluftvorratsbehälters 24 befestigt ist und der Handhabung des Geräts 21 dient.

Auf der der Stange 30 abgewandten Seite des Druckluftvorratsbehälters 24 ist eine Anschlußleitung 31 angebracht, welche in den Druckluftvorratsbehälter 24 mündet. Über die Anschlußleitung 31 kann der Druckluftvorratsbehälter 24 mit einer Druckluftquelle, beispielsweise einem Drucklufthaupttank oder einer Druckluftleitung, verbunden werden. Auf diese Weise kann der Druckluftvorratsbehälter 24 mit Druckluft beaufschlagt werden. Zwischen Druckluftvorratsbehälter 24 und der Druckluftquelle ist ein Reduzierventil zur Einstellung des Drucks angeordnet.

Das Gerät 21 sitzt mit dem Aufsetzstutzen 23 auf dem Lochboden 10 auf. Zur Beschreibung des Lochbodens 10 und des an ihm hängenden Filterschlauchs 11 mit Stützkorb 12 und Randabstützung 13 wird auf das Ausführungsbeispiel gemäß Figur 1 Bezug genommen.

Für einen Abreinigungsvorgang wird der Taster 29 betätigt. Dies aktiviert die Magnetbetätigung 27, wodurch das Membranventil 26 schlagartig öffnet. Auf diese weise gelangt Druckluft aus dem Druckluftvorratsbehälter 24 über einen den Ventilstutzen 25 umgebenden Ringkanal 32 in das Membranventil 26 und von dort in die Luftförderleitung 22 und den Aufsetzstutzen 23 bis in den Filterschlauch 11. Durch den Druckstoß wird der Filterschlauch 11 schlagartig aufgebläht und durch die einströmende Druckluft durchgespült, wodurch ein außen anhaftender Staubkuchen abgereinigt wird. Dieser Vorgang kann durch Öffnen und Schließen des Membranventils 26 mehrfach wiederholt werden. Die Öffnungszeit des Membranventils 26 ist über eine hier nicht dargestellte Steuerung einstellbar, d. h. bei Betätigung des Tasters 29 öffnet das Membranventil 26 nur für eine bestimmte Zeit.

Das in Figur 5 dargestellte Filterprüfgerät 41 stellt funktionsmäßig eine Kombination des Geräts 21 mit dem Filterprüfgerät 1 dar. Das Gerät 21 ist hierfür identisch übernommen worden, weshalb die gleichen Bezugsziffern verwendet werden und auf die Beschreibung dieses Geräts 21 gemäß den Figuren 3 und 4 Bezug genommen wird. Dies gilt auch für den Lochboden 10 mit Filterschlauch 11.

An den Aufsetzstutzen 23 ist über eine flexible Verbindungsleitung ein horizontales Luftförderrohr 42 angeschlossen, in dem endseitig ein Ventilator 43 sitzt. Nahe dem Aufsetzstutzen 23 ist ein Schnellschlußventil 44 in das Luftförderrohr 42 eingebaut. zwischen dem Schnellschlußventil 44 und dem Ventilator 43 sitzt ein Volumenstrommesser 45. Außerdem sind in dem Aufsetzstutzen 23 ein erster Drucksensor 46 und in dem Luftförderrohr 42 zwischen Schnellschlußventil 44 und Ventilator 43 ein zweiter Drucksensor 47 angeordnet. Sowohl der Volumenstrommesser 45 als auch die Drucksensoren 46, 47 sind über hier nicht dargestellte Leitungen mit einer hier ebenfalls nicht dargestellten Meßwertanzeige verbunden. weiterhin sitzt in dem Luftförderrohr 42 ein Staubdetektor mit Anzeige zur Detektion von Staubpartikeln im angesaugten Luftstrom eingebaut.

In dem dargestellten aufgesetzten Zustand kann mit dem Filterprüfgerät 41 eine Luftdurchlässigkeitsmessung durchgeführt werden. Hierzu werden das Schnellschlußventil 44 geöffnet und der Ventilator 43 in Betrieb genommen. Mit Hilfe der Drucksensoren 46, 47 und einer nicht gezeigten Bypass-Anordnung wird ein bestimmter Differenzdruck eingestellt. Über den Volumenstrommesser 45 wird der Volumenstrom im Luftförderrohr 43 erfaßt. Sein Wert entspricht der Luftdurchlässigkeit des Filterschlauchs 11 und damit dessen Verschmutzungsgrad.

Nach Durchführung dieser Messung wird das Luftförderrohr 42 mit Hilfe des Schnellschlußventils 44 verschlossen. Durch Betätigung des Tasters 29 wird die Magnetbetätigung 27 aktiviert und das Membranventil 26 in der schon oben beschriebenen weise geöffnet. Druckluft schießt mit hohem Druck und Impuls in den Filterschlauch 11 und reinigt diesen ab. Nach der Abreinigung wird das Schnellschlußventil 44 wieder geöffnet, und die Luftdurchläasigkeit bzw. der Volumenstrom erneut gemessen. Aus der Differenz beider Luftdurchlässigkeitsmessungen ergibt sich der Abreinigungsgrad. Zusätzlich kann der Volumenstrom zur Durchspülung und damit Reinigung des Filterschlauchs 11 genutzt werden, und zwar während und nach der Druckimpulsreinigung.

Unterhalb das in dem Luftförderrohr 42 installierten Ventilators 43 ist derselbe Ventilator 43 in entgegengesetzter Richtung fördernd dargestellt. Hierdurch soll verdeutlicht werden, daß der Ventilator 43 in dem Luftförderrohr 42 so eingebaut ist, daß er auch umgedreht montiert werden kann. Hierdurch kann das Filterprüfgerät 41 auch in Filteranlagen verwendet werden, bei denen die Durchströmrichtung im Filterschlauch 11 umgekehrt ist, d.h. der Filterschlauch 11 von innen nach außen durchströmt und er demgemäß innenseitig staubbelastet ist.

Statt dieser Konstruktion kann auch ein Ventilator 48 gemäß Figur 6 verwendet werden, der auf der gleichen Seite einen Einlaßstutzen 49 und einen Auslaßstutzen 50 aufweist. In Abhängigkeit von der Durchflußrichtung im Filterschlauch 11 kann der Ventilator 48 mit dem Einlaßstutzen 49 oder dem Auslaßstutzen 50 an das Luftförderrohr 42 angeschlossen werden.

## Patentansprüche

1. Filterprüfgerät (1, 41) für die Überprüfung von filternden Abscheidern mit insbesondere schlauch-, taschen- oder patronenförmigen Filtermitteln (11), mit folgenden Merkmalen:
a) das Gerät (1, 41) hat eine schlauch- oder rohrförmige Luftförderstrecke (2, 42);
b) die Luftförderstrecke (2, 42) weist einerends einen Aufsetzstutzen (3, 23) auf;
c) in der Luftförderstrecke (2, 42) ist ein Luftförderer (4, 43, 48) zur Erzeugung eines Luftstroms in wenigstens einer Richtung angeordnet;
d) der Luftförderstrecke (2, 42) ist ein Druckmesser (5, 46, 47) zur Erfassung und Anzeige des Drucks im Luftstrom zugeordnet;
e) die Luftförderstrecke (2, 42) ist mit einem Luftdurchflußmesser und/oder einem Luftvolumenmesser (6, 45) mit Anzeige (9) versehen;
f) das Gerät (1, 41) ist als tragbare Einheit ausgebildet.

2. Filterprüfgerät nach Anspruch 1, **dadurch gekennzeichnet, daß** der Druckmesser (5, 46, 47) im Bereich des Aufsetzstutzens (3, 23) angeordnet ist.

3. Filterprüfgerät nach Anspruch 1 oder 2, **dadurch gekennzeichnet, daß** die Luftförderstrecke (2, 42) eine Einstelleinrichtung zur Einstellung eines bestimmten Drucks oder eines bestimmten Volumenstroms aufweisen.

4. Filterprüfgerät nach einem der Ansprüche 1 bis 3, **dadurch gekennzeichnet, daß** mehrere Druckmesser (46, 17) vorgesehen sind.

5. Filterprufgerät nach einem der Ansprüche 1 bis 4, **dadurch gekennzeichnet, daß** der Luftförderer (4, 43, 48) als Ventilator oder Druckluftejektor ausgebildet ist.

6. Filterprüfgerät nach einem der Ansprüche 1 bis 5, **dadurch gekennzeichnet, daß** der Luftförderer (43, 48) für die Erzeugung eines Luftstroms vom Luftförderer (3, 48) in Richtung auf den Aufsetzstutzen (23) ausgebildet ist.

7. Filterprüfgerät nach einem der Ansprüche 1 bis 5, **dadurch gekennzeichnet, daß** der Luftförderer (4, 43, 48) für die Erzeugung eines Luftstroms vom Äufsetzstutzen (3, 23) in Richtung auf den Luftförderer (4, 43, 48) ausgebildet ist.

8. Filterprüfgerät nach Anspruch 6 und 7, **dadurch gekennzeichnet, daß** der Luftförderer (42, 48) für die Erzeugung eines Luftstroms in beiden Richtungen ausgebildet ist.

9. Filterprüfgerät nach Anspruch 7 oder 8, **dadurch gekennzeichnet, daß** in der Luftförderstrecke (2, 42) ein Staubdetektor mit Anzeige eingebaut ist.

10. Filterprüfgerät nach einem der Ansprüche 1 bis 9, **gekennzeichnet durch folgende Merkmale**:
a) das Filterprüfgerät (21, 41) hat eine schlauchoder rohrförmige Luftförderleitung (22);
b) die Luftförderleitung (22) weist einerends einen Aufsetzstutzen (23) auf;
c) in der Luftförderleitung (22) ist ein Ventil (26) angeordnet;
d) die Luftförderleitung (22) hat auf der dem Aufsetzstutzen (23) abgewandten Seite des Ventils (26) einen Druckluftanschluß (31).

11. Filterprüfgerät nach Anspruch 10, **dadurch gekennzeichnet, daß** zwischen Druckluftanschluß (31) und Ventil (26) ein Druckluftvorratsbehälter (24) angeordnet ist.

12. Filterprüfgerät nach Anspruch 11, **dadurch gekennzeichnet, daß** der Druckluftvorratsbehälter (24) zum Druckluftanschluß (31) hin verschließbar ist.

13. Filterprüfgerät nach Anspruch 11 oder 12, **dadurch gekennzeichnet, daß** der Druckluftvorratsbehälter (24) die Luftförderleitung (22) zwischen Ventil (26) und Aufsetzstutzen (23) umgibt.

14. Filterprüfgerät nach einem der Ansprüche 10 bis 13, **dadurch gekennzeichnet, daß** das Ventil als Membranventil (26) ausgebildet ist.

15. Filterprüfgerät nach einem der Ansprüche 10 bis 14, **dadurch gekennzeichnet, daß** das Ventil (26) eine Magnetbetätigung (27) mit einstellbarer Öffnungszeit aufweist.

16. Filterprüfgerät nach einem der Ansprüche 1 bis 15, **dadurch gekennzeichnet, daß** der Aufsetzstutzen (3, 23) glockenförmig ausgebildet ist.

17. Filterprüfgerät nach einem der Ansprüche 1 bis 16, **dadurch gekennzeichnet, daß** der Aufsetzstutzen (3, 23) stirnseitig Dichtelemente aufweist.

18. Filterprüfgerät nach mindestens den Ansprüchen 1 und 10, **dadurch gekennzeichnet, daß** Luftförderstrecke (42) und Luftförderleitung (22) ineinandermünden.

19. Filterprüfgerät nach Anspruch 18, **dadurch gekennzeichnet, daß** Luftförderstrecke (42) und Luftförderleitung (22) im Bereich des Aufsetzstutzens (22) zusammenlaufen.

20. Filterprüfgerät nach Anspruch 18 oder 19, **dadurch gekennzeichnet, daß** die Luftförderstrecke (42) ein Schließventil (44) aufweist.

## Claims

1. Filter testing device (1, 41) for checking filter separators having, in particular, filter means (11) in bag, pocket or cartridge form, having the following features:
a) the device (1, 41) has an air-feed tract (2, 42) in hose or pipe form;
b) the air-feed tract (2, 42) has an over-fitting connector (3, 23) at one end;
c) positioned in the air-feed tract (2, 42) is an air feeder (4, 43, 48) to produce a flow of air in at least one direction;
d) associated with the air-feed tract (2, 42) is a pressure gauge (5, 46, 47) to acquire and indicate the pressure in the flow of air;
e) the air-feed tract (2, 42) is provided with an airflow meter and/or an air-volume meter (6, 45) having a display (9);
f) the device (1, 41) is designed as a portable unit.

2. Filter testing device according to claim 1, **characterised in that** the pressure gauge (5, 46, 47) is arranged in the region of the over-fitting connector (3, 23).

3. Filter testing device according to claim 1 or 2, **characterised in that** the air-feed tract (2, 42) has a setting means for setting a certain pressure or a certain volumetric flow.

4. Filter testing device according to one of claims 1 to 3, **characterised in that** there are a plurality of pressure gauges (46, 47) provided.

5. Filter testing device according to one of claims 1 to 4, **characterised in that** the air feeder (4, 43, 48) is in the form of a fan or compressed-air ejector.

6. Filter testing device according to one of claims 1 to 5, **characterised in that** the air feeder (43, 48) is designed to produce a flow of air from the air feeder (3, 48) towards the over-fitting connector (23).

7. Filter testing device according to one of claims 1 to 5, **characterised in that** the air feeder (4, 43, 48) is designed to produce a flow of air from the over-fitting connector (3, 23) towards the air feeder (4, 43, 48).

8. Filter testing device according to claims 6 and 7, **characterised in that** the air feeder (42, 48) is designed to produce a flow of air in both directions.

9. Filter testing device according to claim 7 or 8, **characterised in that** a dust detector with display is fitted in the air-feed tract (2, 42).

10. Filter testing device according to one of claims 1 to 9, **characterised by** the following features:
a) the filter testing device (21, 41) had an air-feed duct (22) in hose or pipe form;
b) the air-feed duct (22) has an over-fitting connector (23) at one end;
c) arranged in the air-feed duct (22) is a valve (26);
d) the air-feed duct (22) has a compressed-air connection (31) on the side of the valve (26) remote from the over-fitting connector (23).

11. Filter testing device according to claim 10, **characterised in that** arranged between the compressed-air connection (31) and the valve (26) is a compressed-air supply reservoir (24).

12. Filter testing device according to claim 11, **characterised in that** the compressed-air supply reservoir (24) can be closed off from the compressed-air connection (31).

13. Filter testing device according to claim 11 or 12, **characterised in that** the compressed-air reservoir surrounds the air-feed duct (22) between the valve (26) and the over-fitting connector (23).

14. Filter testing device according to one of claims 10 to 13, **characterised in that** the valve is in the form of a diaphragm valve (26).

15. Filter testing device according to one of claims 10 to 14, **characterised in that** the valve (26) has a magnetic actuator (27) with an adjustable open time.

16. Filter testing device according to one of claims 1 to 15, **characterised in that** the over-fitting connector (3, 23) is bell-shaped.

17. Filter testing device according to one of claim 1 to 16, **characterised in that** the over-fitting connector (3, 23) has sealing members at the front end.

18. Filter testing device according to at least claims 1 and 10, **characterised in that** the air-feed tract (42) and the air-feed duct (22) open into one another.

19. Filter testing device according to claim 18, **characterised in that** the air-feed tract (42) and the air-feed duct (22) meet in the region of the over-fitting connector (23).

20. Filter testing device according to claim 18 or 19, **characterised in that** the air-feed tract (42) has a closing-off valve (44).

## Revendications

1. Appareil de contrôle de filtre (1, 41) pour le contrôle de filtre d'un séparateur de filtre, avec en particulier des tuyau flexible, sacs, ou type de filtre en forme de cartouche (11) avec les caractéristiques suivantes :
a) appareil (1, 41) a un tuyau flexible ou circuit de flux d'air circulant en forme de tuyau (2, 42) ;
b) le circuit de flux d'air circulant (2, 42) présente à une extrémité un support de montage (3, 23) ;
c) dans le circuit de flux d'air circulant (2, 42) un circuit d'air (4, 43, 48) est disposé à la production d'un écoulement d'air dans au moins une direction ;
d) le circuit de flux d'air circulant (2, 42) est placé un manomètre (50, 46, 47) à la production et une indication de la pression de l'écoulement d'air ;
e) le circuit de flux d'air circulant (2, 42) est muni avec un appareil de mesure du flux d'air un/ou un appareil de mesure de volume d'air (6, 45)et d'un indicateur (9) ;
f) l'appareil (1, 41) est formé comme une unité portable.

2. Appareil de contrôle de filtre selon la revendication 1, **caractérisé en ce que** le manomètre (5, 46, 47) est disposé dans la zone du support de montage.

3. Appareil de contrôle de filtre selon la revendication 1 ou 2, **caractérisé en ce que** le circuit de flux d'air circulant (2, 42) présente un point de vue d'une pression déterminée ou d'un courant de volume déterminé.

4. Appareil de contrôle de filtre selon l'une des revendications 1 à 3, **caractérisé en ce que** plusieurs manomètres (46, 47) sont prévus.

5. Appareil de contrôle de filtre selon l'une des revendications 1 à 4, **caractérisé en ce que** conduit de flux d'air circulant (4, 43 48) soit formés comme ventilateur ou extracteur à pression

6. Appareil de contrôle de filtre selon l'une des revendications 1 à 5 **caractérisé en ce que** le conduit de flux d'air (43, 48), est formée pour la production d'un écoulement d'air est formée par un circuit d'air du conduit de flux d'air (3,48) dans la direction du support de montage (23).

7. Appareil l de contrôle de filtre après l'une des revendications 1 à 5, **caractérisé en ce que** le conduit de flux d'air (4,43,48) est formé pour la production d'un écoulement d'air de par le support de montage (3, 23) dans la direction du conduit de flux d'air (4, 43, 48).

8. Appareil de contrôle de filtre selon les revendications 6 et 7, **caractérisé en ce que** le conduit de flux d'air (42, 48)est formé pour la production d'un écoulement d'air dans les deux directions.

9. Appareil de contrôle de filtre selon les revendications 7 ou 8, **caractérisé en ce que** dans le circuit de flux d'air circulant (2, 42) est installé un détecteur de poussière avec indicateur.

10. Appareil de contrôle de filtre selon l'une des revendications 1 à 9, **caractérisé par** les éléments suivants :
a) l'appareil de contrôle de filtre (21, 41) a un tuyau ou un conduit de flux d'air en forme de tuyau (22) ;
d) le tuyau de flux d'air circulant (22) a un raccord pneumatique (31) détourné du côté de la soupape (26) sur le support de montage (23).

11. Appareil de contrôle de filtre selon la revendication 10, **caractérisé en ce que** un conteneur de flux d'air de réserve (24) est disposé entre l'air comprimé le raccord (31) et la soupape (26).

12. Appareil de contrôle de filtre selon la revendication 11, **caractérisé en ce qu'**il est possible de verrouiller le conteneur de flux d'air de réserves (24) au raccord de flux d'air (31).

13. Appareil de contrôle de filtre selon la revendication 11 ou 12, **caractérisé en ce que** le conteneur de flux d'air de réserves (24) entoure le tuyau de flux d'air circulant (22) entre la soupape (26) et le support de montage {23).

14. Appareil de contrôle de filtre selon l'une des revendications 10 à 13, **caractérisé en ce que** la soupape est formée comme une soupape à membrane (26).

15. Appareil de contrôle de filtre selon l'une des revendications 10 à 14, **caractérisé en ce que** la soupape (26) montre une activité magnétique (27) avec des temps d'ouverture réglable.

16. Appareil de contrôle de filtre selon l'une des revendications 1 à 15, **caractérisé en ce que** le support de montage (3, 23) est formé en cloche.

17. Appareil de contrôle de filtre selon l'une des revendications 1 à 16, **caractérisé en ce que** le support de montage (3,23) montre des éléments d'étanchéité du côté frontale.

18. Appareil de contrôle de filtre selon au moins les revendications 1 et 10, **caractérisé en ce que** le circuit de flux d'air circulant (42) et le tuyau de flux d'air circulant (22) se jettent l'un dans l'autre.

19. Appareil de contrôle de filtre selon la revendication 18, **caractérisé en ce que** le circuit de flux d'air circulant (42) rencontrent le tuyau de flux d'air circulant (22) dans la zone du support de montage (22).

20. Appareil de contrôle de filtre selon la revendication 18 ou 19, **caractérisé en ce que** le circuit de flux d'air circulant (42) montre une soupape de fermeture (44).
